# DEMANDE DE BREVET EUROPEEN

(11) **EP 0 579 535 A1**
(43) Date de publication de la demande: **19.01.1994**
(21) Numéro de dépôt: 93401801.1
(22) Date de dépôt: 09.07.1993
(51) Int. Cl.: B60J 5/04

(54) **Porte de véhicule et son procédé de fabrication.**

(30) Priorité: 15.07.1992 FR 9208726
(71) Demandeur: FRANCE DESIGN Société anonyme, F-79140 Le Pin (FR)
(72) Inventeur: Queveau, Gérard, F-79140 Le Pin (FR)
(74) Mandataire: Farges, Roger

(57) **Abrégé**

L'invention concerne une porte de véhicule et son procédé de fabrication, du type dans lequel un panneau extérieur (1) est serti à un panneau intérieur (2) comportant au moins une ouverture (21), pour constituer un élément de carrosserie.

Selon l'invention, un panneau support (3) portant les organes d'équipement de la porte est fixé au panneau intérieur (2), puis un bandeau d'habillage (4) portant également des organes d'équipement et comportant une poignée (41) de tirage de porte intégrée est fixé sur au moins l'un des panneaux précédents.

Grâce à cette structure, les organes d'équipement sont mis en place de façon plus accessible que dans les portes conventionnelles, ce qui facilite le montage. De plus, le panneau support et le bandeau peuvent être équipés de leurs éléments par un sous-traitant spécialisé, le constructeur du véhicule pouvant monter ces sous-ensembles pré-assemblés sur les portes suivant le procédé du "juste-à-temps".

## Description

L'invention concerne une porte de véhicule et notamment une porte de véhicule du type comportant un panneau extérieur et un panneau intérieur fixés l'un à l'autre, le panneau intérieur comportant au moins une ouverture.

Actuellement, les portes des véhicules automobiles sont traditionnellement constituées d'un panneau extérieur généralement en tôle constituant un élément de carrosserie, d'un panneau intérieur également en tôle appelé doublure sur lequel est serti le panneau extérieur, ces deux panneaux délimitant entre eux un caisson dans le volume duquel sont disposés divers équipements introduits par des trous de passage prévus dans la doublure (vitre, mécanisme de lève-vitre, serrure, poignée d'ouverture de la porte, etc.), et d'un panneau de garnissage en matériau synthétique ou revêtu d'un tel matériau et habillant la partie de la doublure en-dessous de la "fenêtre" pour la vitre, supportant des commandes de lève-vitre, un dispositif de désembuage de cette vitre, un conduit d'aération agrafé sur la doublure, et des vide-poches.

Dans ces conditions, le montage des éléments dans le caisson est délicat, les trous de passage étant petits pour éviter d'affaiblir la doublure, et les fixations étant à réaliser sur la doublure à l'intérieur du caisson, qui n'est pas directement visible.

De plus, le montage des éléments directement dans le caisson interdit une conception sous forme de sous-ensembles pré-assemblés pouvant être montés rapidement.

Pour résoudre ces problèmes, on pourraît également envisager de réaliser une ouverture relativement étendue dans le panneau intérieur, et de monter les équipements sur le panneau de garnissage de telle sorte que l'ensemble constitue le caisson déjà cité. Dans ce cas, le panneau de garnissage faisant office de support de mécanismes, aurait lui-même une fonction mécanique importante, et devrait donc être fixé solidement sur la structure de la porte (la doublure), par vis ou analogue ; les têtes de vis étant peu esthétiques, devraient être masquées par des capuchons qui ne le sont guère plus. De plus, la fixation des mécanismes à la fois sur la tôle de la doublure et sur le matériau synthétique du panneau de garnissage entraîneraient une surface de recouvrement tôle/plastique élevée, défavorable pour le poids ; si l'on choisissait de réduire l'étendue de l'ouverture dans la tôle de la doublure, le montage de la vitre, qui doit être positionnée dans des guidages avant et arrière à l'intérieur du caisson de porte, serait rendu difficile, voire impossible.

L'invention a pour but de remédier à ces inconvénients et de créer une porte de véhicule telle que la mise en place des équipements soit facilitée par une plus grande accessibilité à leur zone d'implantation, sans que cette porte devienne pour autant fragile.

L'invention a également pour but de permettre qu'une partie de la porte, à savoir celle portant les équipements, soit réalisée par un sous-traitant spécialisé, cette partie étant ensuite assemblée à une autre constituée principalement des éléments d'habillage et de carrosserie, réalisée par le constructeur du véhicule ou/et un autre sous-traitant.

A cet effet, l'invention concerne une porte de véhicule, du type comprenant un panneau extérieur et un panneau intérieur fixés l'un à l'autre, le panneau intérieur comportant au moins une ouverture, porte caractérisée en ce qu'elle comprend également un panneau support portant des organes d'équipement, revêtu sur au moins une partie de la surface de sa face opposée au panneau extérieur, d'une feuille d'habillage, et fixé au panneau intérieur, et, du côté du panneau support revêtu de la feuille d'habillage, un bandeau d'habillage fixé sur au moins l'un des panneaux respectivement intérieur et support, portant également des organes d'équipement, et comportant au moins une ouverture en regard d'au moins une partie de la feuille d'habillage.

L'invention concerne également un procédé de fabrication de porte de véhicule dans lequel on fixe l'un à l'autre un panneau intérieur et un panneau extérieur de manière à constituer un élément de carrosserie, caractérisé en ce que l'on fixe ensuite un panneau support portant des organes d'équipement, sur le panneau intérieur, puis on fixe un bandeau d'habillage sur au moins l'un des panneaux respectivement support et intérieur.

Grâce à cette conception, les équipements sont mis en place sur le panneau support d'une façon plus accessible que dans le caisson de porte, ce qui facilite le montage. De plus, le panneau support et éventuellement le bandeau peuvent être équipés de leurs éléments par un sous-traitant spécialisé, et le constructeur du véhicule peut monter ces sous-ensembles pré-assemblés sur les portes suivant le mode de montage dit "juste-à-temps". Egalement, le panneau support peut être fixé au panneau intérieur par des vis, puisqu'il est destiné à être partiellement recouvert par le bandeau d'habillage, qui peut cacher celles-ci, et être lui-même fixé par agrafage dans la mesure où il ne porte lui-même que des organes de poids modéré (en matière synthétique par exemple).

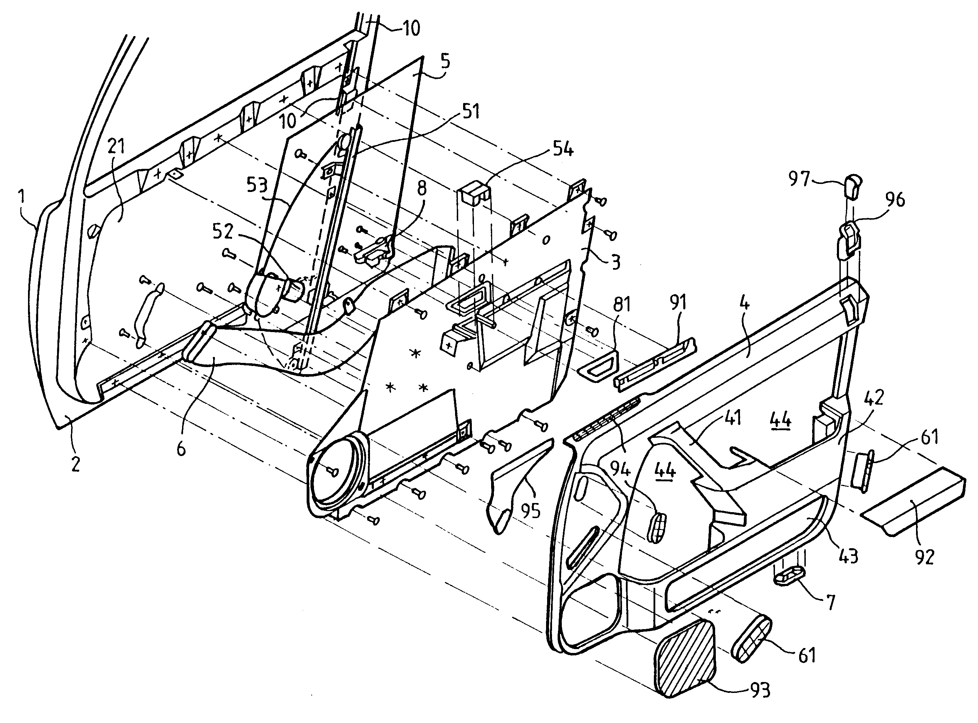

D'autres caractéristiques et avantages de l'invention ressortiront de la description qui va suivre d'une forme de réalisation de cette invention donnée à titre d'exemple non limitatif, représentée sur la figure jointe qui est donc une vue explosée d'une porte selon l'invention.

Comme les portes conventionnelles évoquées plus haut, celle représentée sur la figure (porte avant droite) comporte un panneau extérieur 1 en tôle fixé par sertissage sur un panneau intérieur 2 également en tôle (doublure) présentant une ouverture 21, mais il s'agit ici d'une ouverture de grandes dimensions s'étendant à la partie inférieure du panneau intérieur 2.

Selon l'invention, elle comporte également un autre panneau 3 approximativement plat, en matériau composite, destiné à supporter différents équipements comme cela sera décrit dans la suite, fixé sur la doublure 2 par des vis, revêtu sur au moins une partie de sa face opposée au panneau extérieur 1, d'une feuille d'habillage par exemple en tissu ou en cuir, et, du côté du panneau support 3 revêtu de la feuille d'habillage, une pièce d'habillage 4 en forme, par exemple moulée, dite "bandeau périphérique", également en matériau composite, à laquelle sont intégrés en relief une poignée 41 de tirage de porte et des façades de vide-poche 42, 43 ; le panneau support 3 et le bandeau d'habillage 4 présentent des ouvertures destinées à recevoir les différents organes qui leurs sont fixés par vissage ou par clipsage, et le bandeau 4 comporte également au moins une ouverture 44 en regard d'au moins une partie de la feuille d'habillage du panneau au support 3, pour la laisser apparaître ; le bandeau 4 est fixé par agrafage sur le panneau support 3 et/ou la doublure 2, et, avantageusement, des zones de ce bandeau sont superposées aux têtes des vis de fixation (ou analogues) du panneau support qui sans cela seraient visibles sur la face de celui-ci opposée à la doublure ; de l'extérieur vers l'intérieur, se succèdent donc le panneau extérieur 1, la doublure 2, le panneau support 3 et le bandeau 4 ; la poignée de tirage de porte 41 est fixée par vis sur le panneau support 3 en partie basse et sur un raidisseur de porte en partie haute ; le fond des vide-poches est constitué par les zones du panneau support 3, éventuellement recouvertes par la feuille d'habillage, qui sont en regard des façades 42, 43. Ainsi, le panneau support 3 et le bandeau 4 ont tous deux une fonction d'habillage (décorative) et une fonction de support d'organes d'équipement.

Cette porte est équipée notamment, comme les portes conventionnelles, d'une serrure, qui est ici vissée sur la doublure 2 en partie arrière, et d'une vitre 5 mobile en translation verticale solidarisée à un mécanisme de lève-vitre comportant un rail de guidage central 51 par lequel elle est supportée, un moto-réducteur 52, et des câbles d'actionnement 53 entraînés par le moto-réducteur, fixé par vissage sur le panneau support 3 du côté de la doublure 2, et qui est commandé par un dispositif de commande de lève-vitre 54 fixé par clipsage sur ce panneau 3 du côté du bandeau 4 et passant au travers d'une ouverture de celui-ci. Un conduit d'aération 6 muni de grilles 61 clipsées sur lui et fixé par vis sur le panneau support 3, et des faisceaux d'alimentation électrique, notamment pour une lampe 7 d'éclairage de porte clipsée sur le bandeau 4 et pour le moto-réducteur 52 du lève-vitre, sont également insérés dans le caisson formé par le panneau extérieur 1 et la doublure 2, fermé au moins partiellement par le panneau support 3.

De plus, la porte comporte une poignée d'ouverture 8 sur laquelle est clipsé un enjoliveur 81, fixée par vis sur le panneau support 3 du côté opposé au bandeau 4 et passant au travers d'une ouverture du panneau, de même qu'une articulation 91 de ce vide-poche ; une grille 93 de haut-parleur est clipsée également sur ce panneau support 3. Un ensemble d'organes de désembuage (notamment grilles 94 et conduit 95) et un enjoliveur 96 portant un dispositif de condamnation de porte 97 sont clipsés sur le bandeau 4.

Cette structure permet une fabrication des portes selon le procédé connu sous le nom de "juste-à-temps" ; dans cette hypothèse, on monte indépendamment sur le panneau support 3 les équipements que celui-ci doit porter, et sur le bandeau périphérique 4 les siens propres ; ce montage peut être effectué par des sous-traitants spécialisés ; puis, le panneau support 3 et le bandeau périphérique 4 munis chacun de ses équipements pour constituer un ensemble pré-assemblé peuvent être montés sur l'élément de carrosserie destiné à constituer la porte que l'on a également préalablement réalisé en fixant par exemple par sertissage le panneau extérieur 1 à la doublure 2 (cet élément de carrosserie étant alors réalisé par le constructeur du véhicule).

Le montage des éléments du panneau support 3 peut-être effectué selon le procédé suivant : on visse le conduit d'aération 6, la poignée d'ouverture 8, ainsi que le mécanisme de lève-vitre constitué du rail 51, du moto-réducteur 52 et des câbles 53, et l'articulation 91 du couvercle 92 de vide-poche, sur ce panneau-support 3 préalablement revêtu de la feuille d'habillage ; puis on monte la vitre mobile 5 sur le mécanisme de lève-vitre en position basse en l'engageant dans le rail 51 ; ensuite, on clipse l'enjoliveur 81 de la poignée 8 sur celle-ci, et le couvercle 92 du vide-poche sur l'articulation 91 ; enfin, on clipse le dispositif de commande de lève-vitre 54 et la grille 93 de haut-parleur sur ce panneau 3.

Pour le montage des éléments du bandeau 4 auquel est intégrée la poignée 41 de tirage de porte, il suffit que l'on clipse l'ensemble de désembuage 94, 95, l'enjoliveur 96 du dispositif de condamnation de porte 97, et la lampe 7 d'éclairage de porte, sur ce bandeau.

Comme on l'a vu, pour le montage de la porte, on sertit tout d'abord le panneau extérieur 1 sur la doublure 2 ; puis on visse la serrure sur cette doublure en partie arrière ; ensuite, on met en place le panneau support 3 équipé sur la doublure de telle sorte que la vitre 5 s'engage dans un rail de guidage arrière 10 appartenant à l'ensemble panneau extérieur 1-panneau intérieur 2, et on visse ce panneau support sur la doublure (ici au moyen de douze vis) ; après quoi, on branche les faisceaux et notamment celui de la lampe 7 d'éclairage et du moto-réducteur 52 de lève-vitre ; on met en place la tringle reliée à la poignée d'ouverture 8, puis on agrafe le bandeau 4 équipé sur le panneau support 3 et la doublure 2, si nécessaire de telle sorte que les vis de fixation du support soient cachées par des zones du bandeau, et l'on constitue par cet assemblage les vide-poches entre le panneau support 3 et le bandeau 4 ; enfin, on clipse les grilles 61 du conduit d'aération 6 sur celui-ci et on visse la poignée 41 de tirage de porte sur le panneau support 3 en partie basse et sur le raidisseur de porte en partie haute.

Les divers éléments sont ainsi mis en place de manière plus accessible que dans le cas des caissons des portes conventionnelles, ce qui permet un montage plus aisé, plus rapide, et plus économique.

Bien entendu, l'invention n'est pas limitée à la forme et au mode de réalisation ainsi décrits et représentés, et on pourra en prévoir d'autres formes et d'autres modes sans sortir de son cadre.

## Revendications

**1** **-** Porte de véhicule, du type comprenant un panneau extérieur (1) et un panneau intérieur (2) fixés l'un à l'autre, le panneau intérieur (2) comportant au moins une ouverture (21), porte caractérisée en ce qu'elle comprend également un panneau support (3) portant des organes d'équipement, revêtu sur au moins une partie de sa face opposée au panneau extérieur (1), d'une feuille d'habillage, et fixé au panneau intérieur (2), et, du côté du panneau support (3) revêtu de la feuille d'habillage, un bandeau d'habillage (4) fixé sur au moins l'un des panneaux respectivement intérieur et support, portant également des organes d'équipement, et comportant au moins une ouverture (44) en regard d'au moins une partie de la feuille d'habillage.

**2** **-** Porte selon la revendication 1, caractérisée en ce que le panneau support (3) porte au moins un mécanisme de lève-vitre (51, 52, 53) et un dispositif de commande de lève-vitre (54), ainsi qu'une poignée (8) d'ouverture de porte.

**3** **-** Porte selon la revendication 1, caractérisée en ce que le bandeau d'habillage (4) est muni d'une poignée (41) de tirage de porte, et porte au moins des organes de désembuage (94, 95) et un dispositif de condamnation de porte (97).

**4** **-** Porte selon la revendication 1, caractérisée en ce que le panneau support (3) porte au moins un mécanisme de lève-vitre comportant un rail (51) dans lequel est engagée une vitre (5), un moto-réducteur (52), et des câbles d'actionnement (53) entraînés par le moto-réducteur.

**5** **-** Porte selon la revendication 1, caractérisée en ce que le panneau support (3) porte au moins un conduit d'aération (6), une articulation (91) de couvercle de vide-poche portant elle-même un couvercle (92) de vide-poche, et une grille (93) de haut-parleur.

**6** **-** Porte selon la revendication 1, caractérisée en ce que, sur le bandeau (4), sont clipsés un enjoliveur (96) de dispositif de condamnation de porte (97), et une lampe (7) d'éclairage de porte.

**7** **-** Procédé de fabrication de porte de véhicule dans lequel on fixe l'un à l'autre un panneau intérieur (2) et un panneau extérieur (1) de manière à constituer un élément de carrosserie, caractérisé en ce que l'on fixe ensuite un panneau support (3) portan des organes d'équipement, sur le panneau intérieur (2), puis on fixe un bandeau d'habillage (4) sur au moins l'un des panneaux respectivement support (3) et intérieur (2).

**8** **-** Procédé selon la revendication 7, caractérisé en ce que l'on visse une serrure sur le panneau intérieur (2), puis, après avoir fixé le panneau support (3) sur ce panneau intérieur, on branche électriquement des faisceaux d'alimentation électrique, et ensuite on fixe le bandeau (4).

**9** **-** Procédé selon la revendication 7, caractérisé en ce que l'on monte les organes d'équipement sur le panneau support (3) avant de fixer ce panneau support sur le panneau intérieur (2), et pour ce faire, on fixe sur ce panneau support (3) au moins une poignée d'ouverture (8) ainsi qu'un mécanisme de lève-vitre comprenant un rail (51), puis on monte une vitre mobile (5) sur le mécanisme de lève-vitre en position basse en l'engageant dans le rail (51).

**10** **-** Procédé selon la revendication 9, caractérisé en ce que l'on fixe sur le panneau support (3), tout d'abord un conduit d'aération (6), et, après le mécanisme de lève-vitre (51, 52, 53), une articulation (91) de couvercle (92) de vide-poche, puis, on monte la vitre mobile (5), on fixe un enjoliveur (81) sur la poignée d'ouverture (8), et on monte le couvercle (92) de vide-poche sur son articulation (91), ainsi qu'un dispositif de commande de lève-vitre (54) et une grille de haut-parleur (93) sur le panneau support (3).

**11** **-** Procédé selon la revendication 7, caractérisé en ce que l'on monte des organes d'équipement sur le bandeau d'habillage (4) auquel a été préalablement intégrée en relief au moins une poignée (41) de tirage de porte, avant de fixer ce bandeau (4), et plus particulièrement, on fixe sur ce bandeau (4) des organes d'un ensemble de désembuage (94).

**12** **-** Procédé selon la revendication 7, caractérisé en ce que, avant de fixer le bandeau d'habillage (4), on lui intègre une poignée (41) de tirage de porte, et après avoir fixé le bandeau (4), on fixe cette poignée (41) sur le panneau support (3) en partie basse et sur un raidisseur de porte en partie-haute.

**13** **-** Procédé selon la revendication 7, caractérisé en ce que l'on fixe le panneau support (3) sur le panneau intérieur (2) au moyen d'organes de fixation tels que des vis, partiellement visibles sur la face du panneau support (3) opposée au panneau intérieur (2), puis on agrafe le bandeau d'habillage (4), en superposant des zones de ce bandeau d'habillage aux parties visibles des organes de fixation, sur au moins l'un des panneaux respectivement intérieur (2), et support (3).

**14** **-** Procédé selon la revendication 7, caractérisé en ce que, sur le panneau support (3), et avant sa fixation au panneau intérieur (2), on visse un conduit d'aération (6), une poignée d'ouverture (8), un mécanisme de lève-vitre (51, 52, 53), et une articulation (91) de couvercle de vide-poche, puis on clipse un enjoliveur (81) sur la poignée, et le couvercle (92) du vide-poche sur l'articulation (91), et on clipse le dispositif de commande de lève-vitre (54) et une grille (93) de haut-parleur sur le panneau support (3).
